# EUROPEAN PATENT APPLICATION

(11) **EP 4 654 273 A1**
(43) Date of publication of application: **26.11.2025**
(21) Application number: 24869801.1
(22) Date of filing: 30.05.2024
(51) Int. Cl.: H01M 4/13, H01M 4/70, H01M 10/052

(54) **POSITIVE ELECTRODE SHEET, BATTERY, AND ELECTRICAL DEVICE**

(30) Priority: 28.09.2023 CN 202311277033
(71) Applicant: Contemporary Amperex Technology Co., Limited, Ningde, Fujian 352100 (CN)
(72) Inventor: WANG, Hansen, Ningde, Fujian 352100 (CN); HUANG, Shengyuan, Ningde, Fujian 352100 (CN); HUANG, Xian, Ningde, Fujian 352100 (CN); ZHONG, Ning, Ningde, Fujian 352100 (CN); GE, Xiaoming, Ningde, Fujian 352100 (CN); ZHOU, Yucheng, Ningde, Fujian 352100 (CN)
(74) Representative: Ziebig Hengelhaupt Intellectual Property Attorneys Patentanwaltskanzlei PartGmbB
(86) International application number: PCT/CN2024/096412
(87) International publication number: WO 2025/066238

(57) **Abstract**

The present application relates to a positive electrode sheet, a battery, and an electric apparatus. The positive electrode sheet includes a positive electrode current collector, and an active material layer and an inactive material layer that are disposed on at least one surface of the positive electrode current collector, the inactive material layer being disposed around a periphery of the active material layer, the active material layer including a positive electrode active material, and the active material layer and the inactive material layer being disposed in a same layer. The positive electrode sheet of the present application is used in a lithium metal battery to match with a lithium metal negative electrode, to obtain a battery having a high energy density and a long cycle life.

## Description

### CROSS REFERENCE

The present application claims priority to Chinese Patent Application No. 202311277033.6, entitled "Positive Electrode Sheet, Battery, and Electric Apparatus", filed on September 28, 2023, which is incorporated herein by reference in its entirety.

### TECHNICAL FIELD

The present application relates to the technical field of batteries, and in particular, to a positive electrode sheet, a battery, and an electric apparatus.

### BACKGROUND

In recent years, as the application range of batteries becomes wider, the batteries are widely used in various fields such as energy storage power systems of hydraulic power stations, thermal power stations, wind power stations, and solar power stations, as well as electric tools, electric bicycles, electric motorcycles, and electric vehicles.

Due to the great development of batteries, higher requirements are also put forward on the energy densities and cycle lives of the batteries. Therefore, seeking a battery having a higher energy density and a longer cycle life is one of directions that those skilled in the art are focused on.

### SUMMARY

The present application has been made in view of the above problems, and one objective of the present application is to provide a positive electrode sheet and use the positive electrode sheet in a lithium metal battery to match with a specific negative electrode sheet, to obtain a battery having a high energy density and a long cycle life.

To achieve the foregoing objective, a first aspect of the present application provides a positive electrode sheet, comprising a positive electrode current collector, and an active material layer and an inactive material layer that are disposed on at least one surface of the positive electrode current collector, the inactive material layer being disposed around a periphery of the active material layer, the active material layer comprising a positive electrode active material, and the active material layer and the inactive material layer being disposed in a same layer.

In the present application, by disposing the inactive material layer around the periphery of the active material layer of the positive electrode sheet, and disposing the active material layer and the inactive material layer in the same layer, when the positive electrode sheet and a lithium metal foil negative electrode sheet are laminated to form a battery, an orthographic projection of an edge of an electrode sheet portion of a lithium metal foil on the positive electrode sheet falls within a range of the inactive material layer. In this way, a case in which the soft lithium metal foil is cut by an edge of the positive electrode sheet under pressure during charge and discharge of the battery, resulting in a loss of an electrical connection of the negative electrode sheet can be alleviated, thereby prolonging the cycle life of the battery using the lithium metal foil as a negative electrode. In addition, the orthographic projection of the edge of the electrode sheet portion of the lithium metal foil on the positive electrode sheet falls within the range of the inactive material layer, and a region (namely, an overhang region) in which the electrode sheet portion exceeds a range of the active material layer of the positive electrode sheet can be formed on the lithium metal foil, thereby reducing growth of lithium dendrites on an edge of the lithium metal foil. By matching the positive electrode sheet with a lithium metal foil negative electrode, a battery having a high energy density and a long cycle life can be obtained.

In any implementation, a material of the inactive material layer comprises an insulating material, the insulating material comprising one or more of an organic insulating material and an inorganic insulating material. In this way, the inactive material layer is made of an insulating material, which can alleviate a short circuit between a positive electrode and a negative electrode caused by accidental bending of an electrode sheet or a positive electrode burr piercing a separator and overlapping with a negative electrode active material during a production process of a battery, and can improve safety of the battery.

In any implementation, the organic insulating material comprises an organic polymer, the organic polymer comprising one or more of polymethyl methacrylate, polyimide, polyethylene, polypropylene, polytetrafluoroethylene, polyvinylidene fluoride, and polyvinylidene fluoride-hexafluoropropylene copolymer; and the inorganic insulating material comprises oxide particles, the oxide particles comprising one or more of aluminum oxide particles and titanium oxide particles. By using the organic insulating material and the inorganic insulating material, a conduction short circuit between the positive electrode and the negative electrode can be effectively alleviated.

In any implementation, the thickness of the inactive material layer is equal to the thickness of the active material layer. In this way, a case in which the thickness of the positive electrode sheet is not uniform can be alleviated, and a case in which the lithium metal foil is cut by the positive electrode sheet under pressure, resulting in the loss of the electrical connection of the negative electrode sheet can be better alleviated.

In any implementation, the thickness of a side that is of the inactive material layer and that is close to the active material layer is greater than the thickness of a side that is of the inactive material layer and that is away from the active material layer. In this way, the thickness of the side that is of the inactive material layer and that is close to the active material layer is larger, which can form a certain pressure on the edge of the lithium metal foil, and can function to powder a deposited lithium metal, thereby alleviating growth of lithium dendrites in an edge region of the lithium metal foil; and the thickness of the side that is of the inactive material layer and that is away from the active material layer is smaller, which is conducive to improving the energy density of the battery.

In any implementation, the thickness of the inactive material layer gradually decreases in a direction extending outward from the side that is of the inactive material layer and that is close to the active material layer. In this way, the weight of the positive electrode sheet can be reduced, thereby further improving the energy density of the battery.

In any implementation, the inactive material layer comprises a first region and a second region, the first region being close to the active material layer, the second region being located on a side that is of the first region and that faces away from the active material layer, the thickness of the inactive material layer in the first region being equal to the thickness of the active material layer, and the thickness of the inactive material layer in the second region gradually decreasing in a direction extending outward from a side close to the first region. In this way, the thickness design of the inactive material layer in the first region can apply a certain pressure to a corresponding region of the lithium metal foil, which functions to powder the deposited lithium metal, thereby alleviating growth of lithium dendrites on the lithium metal foil in this region; and the thickness of the inactive material layer in the second region gradually decreases, which can further reduce the weight of the positive electrode sheet and improve the energy density of the battery.

In any implementation, the positive electrode current collector comprises a polymer support layer and a conductive layer disposed on at least one surface of the polymer support layer, and the active material layer and the inactive material layer are disposed on a surface that is of the conductive layer and that faces away from the polymer support layer. In this way, the positive electrode current collector is a composite current collector, which can further improve the energy density of the battery.

A second aspect of the present application further provides a battery, comprising a positive electrode sheet and a negative electrode sheet that are stacked. The positive electrode sheet comprises the positive electrode sheet in the first aspect of the present application, the negative electrode sheet comprises a lithium metal foil, the lithium metal foil comprises an electrode sheet portion and a tab lead-out portion connected to the electrode sheet portion, and an orthographic projection of an edge of the electrode sheet portion on the positive electrode sheet falls within a range of the inactive material layer.

The foregoing battery uses the positive electrode sheet in the first aspect of the present application, and uses the lithium metal foil as the negative electrode sheet, and the orthographic projection of the edge of the electrode sheet portion on the positive electrode sheet falls within the range of the inactive material layer. Even if the positive electrode sheet is pressed close to the negative electrode sheet during charge and discharge of the battery, an edge portion of the positive electrode sheet does not cut the negative electrode lithium metal foil, which can alleviate a case in which the soft lithium metal foil is cut by an edge of the positive electrode sheet under pressure during charge and discharge of the battery, resulting in a loss of an electrical connection of the negative electrode sheet, and can prolong the cycle life of the battery. In addition, the battery has a high energy density.

In any implementation, a distance between the orthographic projection of the edge of the electrode sheet portion on the positive electrode sheet and an outer edge of the inactive material layer is a, and a is 1 mm to 5 mm. Optionally, a is 1.5 mm to 3 mm. In this way, cutting of the electrode sheet portion by the edge of the positive electrode sheet can be effectively alleviated, and the positive electrode sheet may be prevented from being too wide to affect the energy density of the battery.

In any implementation, an orthographic projection of the active material layer on the negative electrode sheet falls within a range of the electrode sheet portion. In this way, an overhang region can be formed at the edge of the electrode sheet portion, which alleviates growth of lithium dendrites at the edge of the electrode sheet portion, thereby improving safety of the battery.

In any implementation, the distance between the orthographic projection of the edge of the electrode sheet portion on the positive electrode sheet and an outer edge of the active material layer is b, and b is 1 mm to 5 mm. Optionally, b is 1.5 mm to 3 mm. In this way, the growth of the lithium dendrites at the edge of the electrode sheet portion can be effectively alleviated, to improve the safety of the battery. In addition, the width of the overhang region cannot be too wide, which is conductive to improving the energy density of the battery.

In any implementation, the inactive material layer comprises a first region and a second region, the first region being close to the active material layer, the second region being located on a side that is of the first region and that faces away from the active material layer, the thickness of the inactive material layer in the second region gradually decreasing in a direction extending outward from a side close to the first region, the thickness of the inactive material layer in the first region being equal to the thickness of the active material layer, and the width of the first region is greater than or equal to b. In this way, the thickness design of the inactive material layer in the first region and the width design of the first region can apply a certain pressure to a corresponding region of the lithium metal foil, which functions to powder a deposited lithium metal, thereby alleviating growth of lithium dendrites on the lithium metal foil in this region; and the thickness of the inactive material layer in the second region gradually decreases, which can further alleviate cutting of the lithium metal foil by the positive electrode sheet under pressure, and can further reduce the weight of the positive electrode sheet and improve the energy density of the battery.

In any implementation, an orthographic projection of an outer edge of the tab lead-out portion on the positive electrode sheet falls within the range of the inactive material layer. In this way, cutting of the tab lead-out portion by the edge of the positive electrode sheet under pressure can be alleviated during charge and discharge of the battery, thereby further improving the cycle life of the battery.

In any implementation, the tab lead-out portion is provided with a tab lead-out foil composited with the lithium metal foil, and a tab connecting piece is connected to the tab lead-out foil. In this way, a negative electrode tab can be welded to the tab connecting piece, to greatly reduce the difficulty of leading out and welding the negative electrode tab. In addition, the tab lead-out foil and the lithium metal foil of the tab lead-out portion are composited to function to collect current and improve the strength of the tab lead-out portion.

In any implementation, the width of the tab connecting piece is c, the length of the tab lead-out foil is d, the width of an end that is of the lithium metal foil and that is close to the tab connecting piece is e, and c≤d≤e. Optionally, d=e. In this way, the tab lead-out foil has a longer length, so that the composite contact area between the tab lead-out foil and the lithium metal foil can be increased, which is more conducive to collecting current and reducing generation of overcurrent phenomena.

In any implementation, the thickness of the lithium metal foil is 10 µm to 50 µm, and is optionally 30 µm to 50 µm. In this way, it is conductive to making the battery have a high energy density and a long cycle life.

A third aspect of the present application further provides an electric apparatus, comprising the battery according to the second aspect of the present application.

Details of one or a plurality of embodiments of the present application are set forth in the accompanying drawings and the description below. Other features, objectives, and advantages of the present application will be apparent from the specification, and the accompanying drawings, and the claims.

### DESCRIPTION OF DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a main view of a positive electrode sheet according to an implementation of the present application;
FIG. 2 is a schematic diagram of a sectional view of a positive electrode sheet according to an implementation of the present application;
FIG. 3 is a schematic diagram of a sectional view of a positive electrode sheet according to another implementation of the present application;
FIG. 4 is a schematic diagram of a sectional view of a positive electrode sheet according to another implementation of the present application;
FIG. 5 is a schematic diagram of a sectional view of a positive electrode current collector according to an implementation of the present application;
FIG. 6 is a schematic diagram of a main view of stacking of a positive electrode sheet and a negative electrode sheet in a battery according to an implementation of the present application;
FIG. 7 is a schematic diagram of a main view of stacking of a positive electrode sheet and a negative electrode sheet in a battery according to another implementation of the present application;
FIG. 8 is a schematic diagram of a sectional view of stacking of a positive electrode sheet and a negative electrode sheet in a battery according to an implementation of the present application;
FIG. 9 is a schematic diagram of a sectional view of stacking of a positive electrode sheet and a negative electrode sheet in a battery according to another implementation of the present application;
FIG. 10 is a schematic diagram of a sectional view of stacking of a positive electrode sheet and a negative electrode sheet in a battery according to another implementation of the present application;
FIG. 11 is a schematic diagram of a main view of a negative electrode sheet in a battery according to an implementation of the present application;
FIG. 12 is a schematic diagram of a side view when a tab connecting piece of a negative electrode in a battery is not cut according to an implementation of the present application;
FIG. 13 is a schematic diagram of a main view when a tab connecting piece of a negative electrode in a battery is not cut according to an implementation of the present application;
FIG. 14 is a schematic diagram of a battery cell according to an implementation of the present application;
FIG. 15 is an exploded view of the battery cell shown in FIG. 14 according to an implementation of the present application; and
FIG. 16 is a schematic diagram of an electric apparatus using a battery as a power supply according to an implementation of the present application.

### Description of reference signs:

5: battery cell; 51: housing; 52: electrode assembly; 53: cover plate; 6: electric apparatus; 10: positive electrode sheet; 11: positive electrode current collector; 12: active material layer; 13: inactive material layer; 111: polymer support layer; 112: conductive layer; 131: first region; 132: second region; 20: negative electrode sheet; 21: lithium metal foil; 22: tab lead-out foil; 23: tab connecting piece; 211: electrode sheet portion; 212: tab lead-out portion.

### DESCRIPTION OF EMBODIMENTS

The following describes in detail implementations of a positive electrode sheet, a battery, and an electric apparatus in the present application with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present application, and are not intended to limit subject matters described in the claims.

The "range" disclosed in the present application may be limited in the form of a lower limit and an upper limit. A given range is limited by selecting a lower limit and an upper limit, which define boundaries of a special range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "a plurality of", "a variety of", and the like related in the present application mean a number of two or more. For example, "one or more" means one or greater than or equal to two.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by those skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided. In the present application, unless otherwise specified, A (e.g., B) means that B is a non-limiting example of A, and it may be understood that A is not limited to B.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction.

The weight described in the description of the embodiments of the present application may be a weight unit well-known in the chemical industry such as µg, mg, g, or kg.

At present, due to the great development of batteries, higher requirements are also put forward on the energy densities and cycle lives of the batteries. Therefore, seeking for a battery having a high energy density and a long cycle life is one of directions that those skilled in the art are focused on. In view of this, the present application provides a positive electrode sheet, and a battery having a high energy density and a long cycle life can be obtained by improving a structure of the positive electrode sheet and matching the positive electrode sheet with a lithium metal negative electrode.

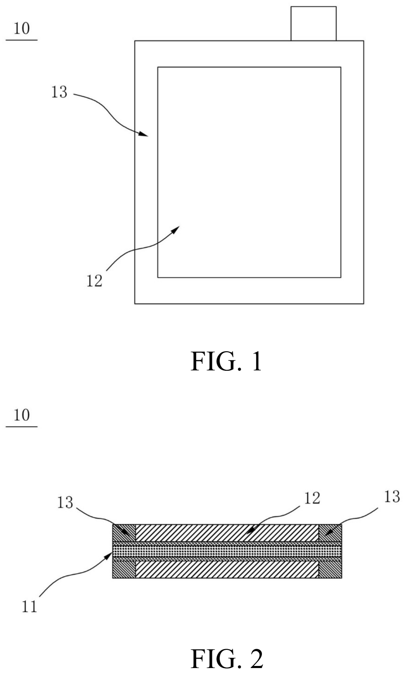

Referring to FIG. 1 to FIG. 4, in some implementations, a first aspect of the present application provides a positive electrode sheet 10. The positive electrode sheet 10 includes a positive electrode current collector 11 and an active material layer 12 and an inactive material layer 13 that are disposed on at least one surface of the positive electrode current collector 11. The inactive material layer 13 is disposed around a periphery of the active material layer 12, the active material layer 12 includes a positive electrode active material, and the inactive material layer 13 does not include a positive electrode active material.

A lithium metal negative electrode is an ultimate negative electrode solution for implementing an ultra-high energy density lithium ion battery, and the use of a lithium metal as a negative electrode can implement a higher energy density than the use of a negative electrode active material such as graphite. The lithium metal negative electrode used in a current lithium metal battery is usually formed by covering an ultra-thin lithium foil on a copper foil, where the copper foil is configured to provide current carrier and used as a substrate to provide mechanical support and strength for the lithium metal foil. However, the density of the copper foil (about 8.92 g/cm²) is nearly 17 times the density of the lithium metal (about 0.53 g/cm²). This means that the weight of the copper foil is a significant factor in pursuing extremely high energy density, and if the copper foil can be completely eliminated as a negative electrode substrate, the energy density of the battery can be further enhanced. At the same time, the thickness design of the lithium metal foil can also obtain more space, support longer cycle consumption, and prolong the cycle life of the lithium metal battery.

However, if the negative electrode does not use a copper foil substrate to be laminated with the lithium metal foil, but directly uses the lithium metal foil as the negative electrode sheet, the following problems need to be overcome: The lithium metal foil itself is soft and has poor strength, and the lithium metal foil is very easily cut by an edge of a positive electrode under pressure during charge and discharge of the battery, which causes the lithium metal foil to be separated from an electrical contact with a negative electrode tab, thereby resulting in that the battery fails and the cycle life of the battery is short.

In view of the above problems, in the present application, the inactive material layer 13 is disposed around the periphery of the active material layer 12 of the positive electrode sheet 10, the active material layer 12 and the inactive material layer 13 are disposed in the same layer, and the inactive material layer 13 does not include a positive electrode active material. When the positive electrode sheet 10 and a lithium metal foil negative electrode sheet layer are laminated to form a battery, an orthographic projection of an edge of an electrode sheet portion 211 of the lithium metal foil 21 on the positive electrode sheet 10 falls within a range of the inactive material layer 13, that is, the inactive material layer 13 can cover the edge of the electrode sheet portion 211. In this way, even if the positive electrode sheet is pressed close to the negative electrode sheet during charge and discharge of the battery, an edge portion of the positive electrode sheet does not cut the negative electrode lithium metal foil, which can alleviate a case in which the soft lithium metal foil is cut by an edge of the positive electrode sheet under pressure during charge and discharge of the battery, resulting in a loss of an electrical connection of the negative electrode sheet, thereby prolonging the cycle life of the battery using the lithium metal foil as the negative electrode. By matching the positive electrode sheet with a lithium metal foil negative electrode, a battery having a high energy density and a long cycle life can be obtained.

In some implementations, a material of the inactive material layer 13 includes an insulating material, the insulating material including one or more of an organic insulating material and an inorganic insulating material. The inactive material layer 13 is made of an insulating material, which can alleviate a short circuit between a positive electrode and a negative electrode caused by accidental bending of an electrode sheet or a positive electrode burr piercing a separator and overlapping with a negative electrode active material during a production process of a battery. By using the insulating material as the inactive material layer 13, even if the electrode sheet is bent or the positive electrode burr pierces the separator and overlaps with the negative electrode active material, the positive and negative electrodes will not be conducted, and the positive electrode and the negative electrode will not be short-circuited, which can improve safety of the battery.

In some implementations, the insulating material of the inactive material layer 13 includes one or more of polymethyl methacrylate (PMMA), polyimide (PI), polyethylene (PE), polypropylene (PP), polytetrafluoroethylene (PTFE), polyvinylidene fluoride (PVDF), polyvinylidene fluoride-hexafluoropropylene copolymer (PVDF-HFP), aluminum oxide particles, and titanium oxide particles. By using the insulating material, a conduction short circuit between the positive electrode and the negative electrode can be effectively alleviated. In the foregoing insulating materials, polymethyl methacrylate, polyimide, polyethylene, polypropylene, polytetrafluoroethylene, polyvinylidene fluoride, and polyvinylidene fluoride-hexafluoropropylene copolymer are organic polymer insulating materials, which can be formed on the positive electrode current collector 11 through pasting or slurry coating; and the aluminum oxide particles and the titanium oxide particles are inorganic particle insulating materials, which can be formed on the positive electrode current collector 11 by slurry coating. The particle sizes of the aluminum oxide particles and the titanium oxide particles may be on a nanometer scale or a micron scale.

It may be understood that the inactive material layer 13 may be formed by using one or more of the foregoing insulating polymers, the inactive material layer 13 may be formed by using one or more of the foregoing insulating inorganic particles, or the inactive material layer 13 may be formed by mixing one or more of the foregoing polymers with one or more of the foregoing inorganic particles.

Referring to FIG. 2, in some implementations, the thickness of the inactive material layer 13 is equal to the thickness of the active material layer 12. By setting the thickness of the inactive material layer 13 to be equal to the thickness of the active material layer 12, a case in which the thickness of the positive electrode sheet 10 is not uniform can be alleviated, and a case in which the lithium metal foil is cut by the positive electrode sheet under pressure, resulting in the loss of the electrical connection of the negative electrode sheet can be better alleviated.

In some implementations, the thickness of a side that is of the inactive material layer 13 and that is close to the active material layer 12 is greater than the thickness of a side that is of the inactive material layer 13 and that is away from the active material layer 12. In this way, the thickness of the side that is of the inactive material layer 13 and that is close to the active material layer 12 is larger, which can form a certain pressure on the edge of the lithium metal foil 21, and can function to powder a deposited lithium metal, thereby alleviating growth of lithium dendrites in an edge region of the lithium metal foil 21; and the thickness of the side that is of the inactive material layer 13 and that is away from the active material layer 12 is smaller, which is conducive to improving the energy density of the battery.

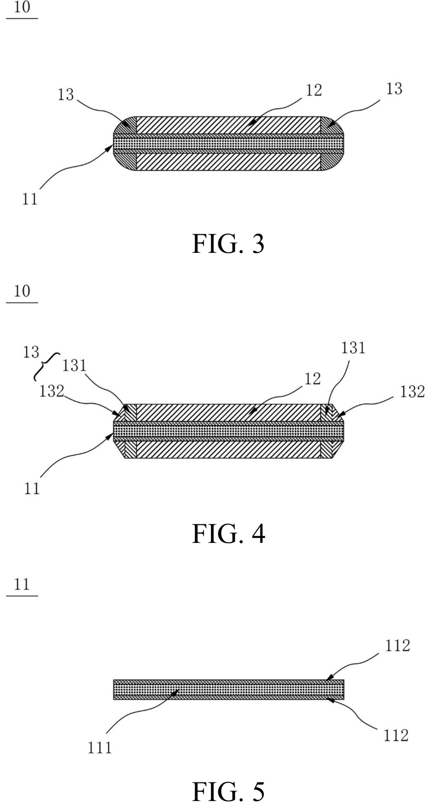

Referring to FIG. 3, in some implementations, the thickness of the inactive material layer 13 gradually decreases in a direction extending outward from the side that is of the inactive material layer 13 and that is close to the active material layer 12. In this way, the inactive material layer 13 close to one side of the active material layer 12 has a larger thickness easily, which is more conductive to alleviating growth of lithium dendrites in the edge region of the lithium metal foil 21. In addition, the inactive material layer 13 close to an edge of the positive electrode sheet 10 has a smaller thickness, which is more conductive to reducing the weight of the positive electrode sheet 10, thereby improving the energy density of the battery.

It may be understood that the thickness of the inactive material layer 13 may gradually decrease in a linear form, a curved form, or a gradient change form in the direction extending outward from the side that is of the inactive material layer 13 and that is close to the active material layer 12.

Referring to FIG. 4, in some implementations, the inactive material layer 13 includes a first region 131 and a second region 132. The first region 131 is close to the active material layer 12, the second region 132 is located on a side that is of the first region 131 and that faces away from the active material layer 12; the thickness of the inactive material layer 13 in the first region 131 is equal to the thickness of the active material layer 12; and the thickness of the inactive material layer 13 in the second region 132 gradually decreases in a direction extending outward from a side close to the first region 131.

Because lithium dendrites easily grow in a region that is of the edge of the negative electrode lithium metal foil and that is close to the active material layer 12, by setting the thickness of the inactive material layer 13 in the first region 131 that is close to the active material layer 12 in the positive electrode sheet 10 to be equal to the thickness of the active material layer 12, a certain pressure can be applied to a corresponding region of the lithium metal foil through the inactive material layer 13 in the first region 131, which functions to powder the deposited lithium metal and alleviates the growth of the lithium dendrites on the lithium metal foil in this region. In addition, in the direction extending outward from the side close to the first region 131, the thickness of the inactive material layer 13 in the second region 132 gradually decreases, which is more conductive to reducing the weight of the positive electrode sheet 10 and improving the energy density of the battery.

It may be understood that the thickness of the inactive material layer 13 in the second region 132 may gradually decrease in a linear form, a curved form, or a gradient change form in the direction extending outward from the side close to the first region 131.

Referring to FIG. 5, in some implementations, the positive electrode current collector 11 includes a polymer support layer 111 and a conductive layer 112 disposed on at least one surface of the polymer support layer 111, and the active material layer 12 and the inactive material layer 13 are disposed on a surface that is of the conductive layer 112 and that faces away from the polymer support layer 111. In this way, the positive electrode current collector 11 is a composite current collector, and may use an ultra-thin conductive layer 112, which may further improve the energy density of the battery.

It should be noted that a material of the polymer support layer 111 may be, but is not limited to, one or more of polyethylene terephthalate (PET), polyimide (PI), polystyrene (PS), polyethylene (PE), polypropylene (PP), polycarbonate (PC), polyvinyl chloride (PET), and polymethyl methacrylate (PMMA). The thickness of the polymer support layer 111 may be 1 µm to 20 µm. To further improve the energy density of the battery, the thickness of the polymer support layer 111 may be 1 µm to 5 µm. The conductive layer 112 may be made of an aluminum metal, and the conductive layer 112 may be formed on a surface of the polymer support layer 111 through magnetron sputtering, evaporation, or the like. The thickness of the conductive layer 112 may be 0.5 µm to 5 µm. To further improve the energy density of the battery, the thickness of the conductive layer 112 may be 0.5 µm to 2 µm.

In some implementations, the positive electrode sheet 10 may be prepared by using the following method: providing the polymer support layer 111, and forming the conductive layer 112 on the surface of the polymer support layer 111 through magnetron sputtering, evaporation, or the like, to obtain the positive electrode current collector 11; attaching a positive electrode slurry to the conductive layer 112 of the positive electrode current collector 11 to form a positive electrode slurry layer, the positive electrode slurry including a positive electrode active material; drying the positive electrode slurry layer, to form the active material layer 12; and forming the inactive material layer 13 on the conductive layer 112 through pasting or slurry coating, so that the inactive material layer 13 is disposed around the active material layer 12, to obtain the positive electrode sheet 10.

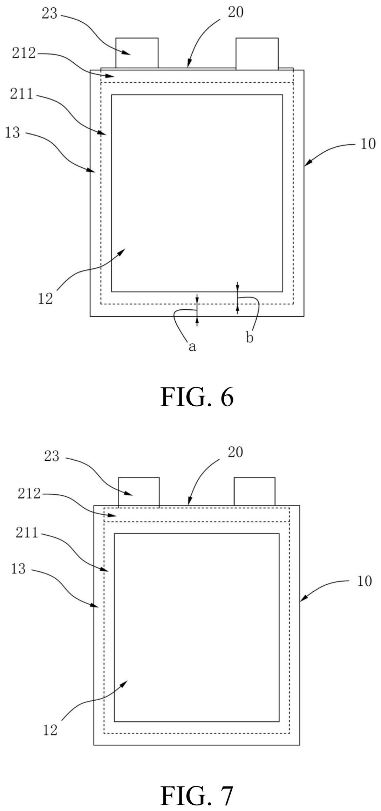

Referring to FIG. 6 to FIG. 10, in some implementations, a second aspect of the present application provides a battery. The battery includes a positive electrode sheet 10 and a negative electrode sheet 20 that are stacked. The positive electrode sheet 10 uses the positive electrode sheet 10 in the first aspect of the present application, the negative electrode sheet 20 uses a lithium metal foil 21, the lithium metal foil 21 includes an electrode sheet portion 211 and a tab lead-out portion 212 connected to the electrode sheet portion 211, and an orthographic projection of an edge of the electrode sheet portion 211 on the positive electrode sheet 10 falls within a range of the inactive material layer 13.

The foregoing battery uses the positive electrode sheet 10 in the first aspect of the present application, and uses the lithium metal foil 21 as the negative electrode sheet 20, and the orthographic projection of the edge of the electrode sheet portion 211 on the positive electrode sheet 10 falls within the range of the inactive material layer 13. Even if the positive electrode sheet 10 is pressed close to the negative electrode sheet 20 during charge and discharge of the battery, an edge portion of the positive electrode sheet 10 does not cut the negative electrode lithium metal foil 21, which can alleviate a case in which the soft lithium metal foil 21 is cut by an edge of the positive electrode sheet 10 under pressure during charge and discharge of the battery, resulting in a loss of an electrical connection of the negative electrode sheet 20, and can prolong the cycle life of the battery. In addition, the battery has a high energy density.

If the orthographic projection of the edge of the electrode sheet portion 211 on the positive electrode sheet 10 falls beyond the range of the inactive material layer 13, that is, the edge of the electrode sheet portion 211 is located on an outer side of the inactive material layer 13, the inactive material layer 13 cannot cover the edge of the electrode sheet portion 211. Therefore, because the electrode sheet portion 211 of the lithium metal foil 21 is soft, the electrode sheet portion 211 is easily cut by the edge of the positive electrode sheet 10 under pressure during charge and discharge of the battery, which affects the cycle life of the battery.

Referring to FIG. 6, in some implementations, a distance between the orthographic projection of the edge of the electrode sheet portion 211 of the lithium metal foil 21 on the positive electrode sheet 10 and an outer edge of the inactive material layer 13 is a, and a is 1 mm to 5 mm. In this way, the outer edge of the inactive material layer 13 exceeds the edge of the electrode sheet portion 211 by 1 mm to 5 mm, which can effectively alleviate cutting of the electrode sheet portion 211 by the edge of the positive electrode sheet 10, and can prevent the positive electrode sheet 10 from being too wide to affect the energy density of the battery.

It may be understood that a may be, but is not limited to, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, or 5.0 mm.

In some implementations, the distance a between the orthographic projection of the edge of the electrode sheet portion 211 of the lithium metal foil 21 on the positive electrode sheet 10 and the outer edge of the inactive material layer 13 is equal to 1.5 mm to 3 mm. In this way, the cutting of the electrode sheet portion 211 by the edge of the positive electrode sheet 10 can be better alleviated, and it is conducive to further improving the energy density of the battery.

Referring to FIG. 6 and FIG. 7, in some implementations, an orthographic projection of the active material layer 12 on the negative electrode sheet 20 falls within a range of the electrode sheet portion 211, that is, the range of the electrode sheet portion 211 can cover a range of the active material layer 12. In this way, an overhang region can be formed at the edge of the electrode sheet portion 211, which alleviates growth of lithium dendrites at the edge of the electrode sheet portion 211, thereby improving safety of the battery. It should be noted that the overhang region refers to a region that is of the electrode sheet portion 211 and that exceeds the active material layer 12.

Referring to FIG. 6, in some implementations, a distance between the orthographic projection of the edge of the electrode sheet portion 211 on the positive electrode sheet 10 and an outer edge of the active material layer 12 is b, and b=1 mm to 5 mm. In this way, forming of the lithium dendrites at the edge of the electrode sheet portion 211 can be effectively alleviated, to improve the safety of the battery. In addition, the width of the overhang region cannot be too wide, which is conductive to improving the energy density of the battery.

It may be understood that b may be, but is not limited to, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, or 5.0 mm.

In some implementations, the distance b between the orthographic projection of the edge of the electrode sheet portion 211 on the positive electrode sheet 10 and the outer edge of the active material layer 12 is equal to 1.5 mm to 3 mm. In this way, the growth of the lithium dendrites at the edge of the electrode sheet portion 211 can be better alleviated, and it is conducive to further improving the energy density of the battery.

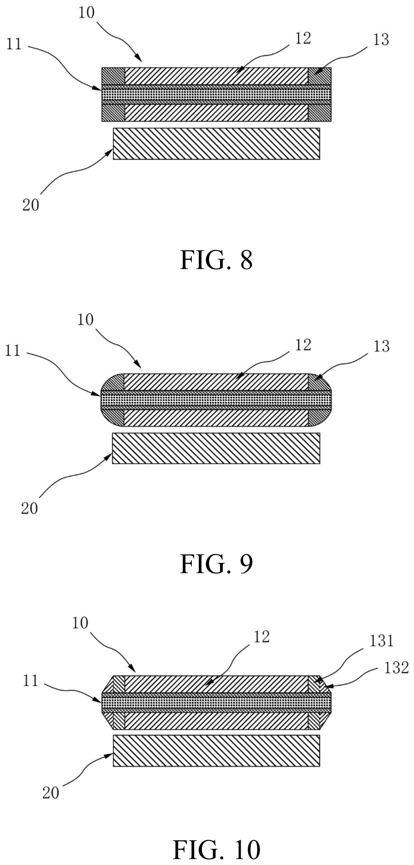

Referring to FIG. 10, in some implementations, the inactive material layer 13 includes a first region 131 and a second region 132. The first region 131 is disposed close to the active material layer 12, the second region 132 is located on a side that is of the first region 131 and that faces away from the active material layer 12, the thickness of the inactive material layer 13 in the second region 132 gradually decreases in a direction extending outward from a side close to the first region 131, the thickness of the inactive material layer 13 in the first region 131 is equal to the thickness of the active material layer 12, and the width of the first region 131 is greater than or equal to b.

By using the foregoing arrangement, the width of the first region 131 is set to be greater than or equal to b, so that the first region 131 can cover the overhang region at the edge of the electrode sheet portion 211. In addition, the thickness of the inactive material layer 13 in the first region 131 is equal to the thickness of the active material layer 12, and a pressure can be applied to the overhang region through the inactive material layer 13 in the first region 131 during charge and discharge of the battery, so that a deposited lithium metal in the overhang region is powdered, which is more conductive to inhibiting the growth of the lithium dendrites. In addition, in the direction extending outward from the side close to the first region 131, the thickness of the inactive material layer 13 in the second region 132 gradually decreases, which can further alleviate the cutting of the electrode sheet portion 211 by the edge of the positive electrode sheet 10 under pressure, and can reduce the weight of the positive electrode sheet 10 and improve the energy density of the battery.

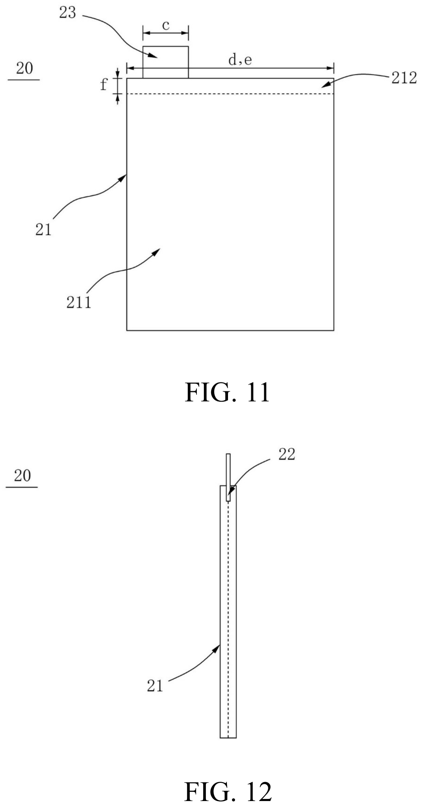

Referring to FIG. 11 to FIG. 13, in some implementations, the tab lead-out portion 212 is provided with a tab lead-out foil 22 composited with the lithium metal foil 21, and a tab connecting piece 23 is connected to the tab lead-out foil 22. In addition to the fact that the lithium metal foil 21 is easily cut by the edge of the positive electrode under pressure, the battery using the lithium metal foil 21 as the negative electrode sheet 20 also has a problem that it is difficult to lead out and weld the negative electrode tab. In view of this, in the present application, the tab lead-out portion 212 is disposed on the lithium metal foil 21, the tab lead-out foil 22 composited with the lithium metal foil 21 is disposed on the tab lead-out portion 212, and a tab connecting piece 23 is connected to the tab lead-out foil 22. In this way, the negative electrode tab can be welded to the tab connecting piece 23, to greatly reduce the difficulty of leading out and welding the negative electrode tab. The tab lead-out foil 22 and the lithium metal foil 21 of the tab lead-out portion 212 are composited to function to collect current and improve the strength of the tab lead-out portion 212.

It may be understood that the tab lead-out foil 22 needs to be a metal foil with good conductivity. As a specific example, the tab lead-out foil 22 may be a copper foil.

In some implementations, the tab lead-out portion 212 is located at one end of the electrode sheet portion 211, the width f of the tab lead-out portion 212 may be 1 mm to 10 mm, optionally 1 mm to 3 mm; the thickness of the tab lead-out foil 22 may be 2 µm to 20 µm, optionally 2 µm to 5 µm; and the width of the lithium metal foil 21 may be 10 mm to 500 mm. The thickness of the lithium metal foil 21 may be 5 µm to 200 µm, optionally 10 µm to 50 µm, or may further be 30 µm to 50 µm, and the thickness of the lithium metal foil 21 within this range can enable the battery to have a high energy density and a long cycle life.

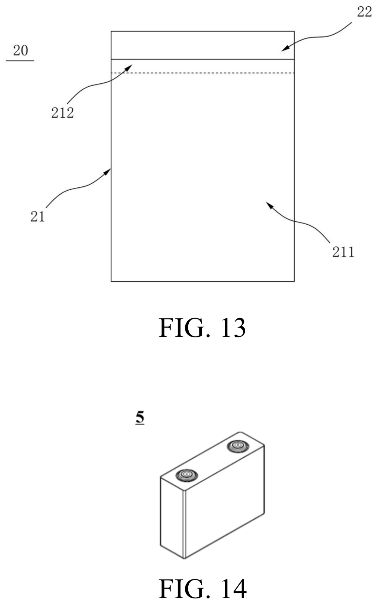

In some implementations, the tab lead-out foil 22 of the tab lead-out portion 212 may be attached to the lithium metal foil 21 by rolling. Specifically, the tab lead-out foil 22 may be sandwiched between two lithium metal foils 21, and the two lithium metal foils 21 and the tab lead-out foil 22 are integrated by rolling under heating (refer to FIG. 12). Because the lithium metal foils 21 have good ductility under heating, it can be ensured that the tab lead-out foil 22 is sandwiched between the lithium metal foils without generating a thickness difference at a boundary between the tab lead-out portion 212 and the electrode sheet portion 211, which does not affect thickness uniformity of an edge of a cell. When the tab lead-out foil 22 is rolled and laminated, a part of the tab lead-out foil 22 may be extended out of the lithium metal foil 21, to form a blank region (refer to FIG. 13). The blank region is cut based on a required size after rolling and lamination, to form the tab connecting piece 23. In this way, the tab connecting piece 23 is integrated with the tab lead-out foil 22.

Referring to FIG. 7, in some implementations, an orthographic projection of an outer edge of the tab lead-out portion 212 on the positive electrode sheet 10 falls within the range of the inactive material layer 13. Although the strength of the tab lead-out portion 212 is improved compared with the strength of a pure lithium metal foil 21 because the tab lead-out foil 22 is laminated in the tab lead-out portion 212, a possibility that the tab lead-out portion 212 is cut by the edge of the positive electrode sheet 10 is not excluded in a case in which the thickness of the tab lead-out foil 22 is thin. In view of this, by ensuring that the orthographic projection of the outer edge of the tab lead-out portion 212 on the positive electrode sheet 10 falls within the range of the inactive material layer 13, that is, the inactive material layer 13 can cover the outer edge of the tab lead-out portion 212, the cutting of the tab lead-out portion 212 by the edge of the positive electrode sheet 10 under pressure during charge and discharge of the battery can be alleviated, thereby further improving the cycle life of the battery.

Referring to FIG. 11, in some implementations, the width of the tab connecting piece 23 is c, the length of the tab lead-out foil 22 is d, the width of an end that is of the lithium metal foil 21 and that is close to the tab connecting piece 23 is e, and c≤d≤e. That is, the length of the tab lead-out foil 22 is greater than or equal to the width of the tab connecting piece 23, and is less than or equal to the width of the end that is of the lithium metal foil 21 and that is close to the tab connecting piece 23. Generally, the length of the tab lead-out foil 22 needs to be set longer, to better collect current. In a specific example, the length of the tab lead-out foil 22 is equal to the width of the end that is of the lithium metal foil 21 and that is close to the tab connecting piece 23.

In some implementations, a third aspect of the present application provides an electric apparatus. The electric apparatus includes the battery in the second aspect of the present application.

The following describes the battery and the electric apparatus in the present application with appropriate reference to the accompanying drawings.

Unless specifically stated, components and types or contents of materials of the battery are applicable to both a lithium ion battery and a sodium ion battery.

In an implementation of the present application, a battery is provided.

Generally, the battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited, and can allow ions to pass through.

### Positive electrode sheet

The positive electrode sheet includes a positive electrode current collector and an active material layer disposed on at least one surface of the positive electrode current collector.

As a non-limiting example, the positive electrode current collector has two surfaces opposite to each other in its own thickness direction, and the active material layer is disposed on either one or both of the two opposite surfaces of the positive electrode current collector.

In some implementations, the positive electrode sheet is the positive electrode sheet in the first aspect of the present application.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some implementations, a positive electrode active material may include a positive electrode active material for a battery well-known in the art.

As a non-limiting example, a positive electrode active material of a lithium ion battery may include one or more of the following materials: olivine-structured lithium-containing phosphate, a lithium transition metal oxide, and their respective modified compounds. However, the present application is not limited to these materials, and other conventional materials that can be used as a positive electrode active material of a battery may also be used. These positive electrode active materials may be used alone or in combination of two or more thereof. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, and their respective modified compounds thereof. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds. A non-limiting example of the lithium cobalt oxide may include LiCoO₂; a non-limiting example of the lithium nickel oxide may include LiNiO₂; a non-limiting example of the lithium manganese oxide may include LiMnO₂, LiMn₂O₄, or the like; a non-limiting example of the lithium nickel cobalt manganese oxide may include LiNi_{1/3}Co_{1/3}Mn_{1/3}O₂ (or may be referred to as NCM₃₃₃ for short), LiNi_{0.5}Co_{0.2}Mn_{0.3}O₂ (or may be referred to as NCM₅₂₃ for short), LiNi_{0.5}Co_{0.25}Mn_{0.25}O₂ (or may be referred to as NCM₂₁₁ for short), LiNi_{0.6}Co_{0.2}Mn_{0.2}O₂ (or may be referred to as NCM₆₂₂ for short), LiNi_{0.8}Co_{0.1}Mn_{0.1}O₂ (or may be referred to as NCM₈₁₁ for short), or the like; and a non-limiting example of a lithium nickel cobalt aluminum oxide may include LiNi_{0.8}Co_{0.15}Al_{0.05}O₂.

It may be understood that deintercalation and consumption of lithium (Li) occur during charge and discharge of the battery, and the content of Li in the positive electrode sheet varies when the battery is discharged to different states. In the enumeration of positive electrode materials in the present application, unless otherwise specified, the content of Li is in an initial state of the material. When the positive electrode material is applied to a positive electrode sheet in a battery system, the content of Li in the positive electrode material contained in the electrode sheet usually changes after a charge and discharge cycles. The content of Li may be measured by using a molar content, but is not limited thereto. For "the content of Li is in an initial state of the material", the initial state of the material means a state before the material is added to a positive electrode slurry. It may be understood that a new material obtained by performing appropriate modification on the enumerated positive electrode material is also within the scope of the positive electrode material, the foregoing appropriate modification refers to an acceptable modification manner for the positive electrode material, such as coating modification, and a non-limiting example of the acceptable modification manner is, for example, coating modification.

In the enumeration of the positive electrode material in the present application, the content of oxygen (O) is only a theoretical state value, the molar content of oxygen changes due to the release of oxygen from a lattice, and the actual molar content of O fluctuates. The content of O may be measured by using a molar content, but is not limited thereto.

As a non-limiting example, a positive electrode active material of a sodium ion battery may include one or more of the following materials: a sodium transition metal oxide, a polyanionic compound, and a Prussian blue compound. However, the present application is not limited to these materials, and other conventional well-known materials that can be used as a positive electrode active material of a sodium ion battery may also be used.

As an optional technical solution of the present application, in the sodium transition metal oxide, a transition metal may be one or more of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0<x≤1.

As an optional technical solution of the present application, the polyanionic compound may be a compound having a sodium ion, a transition metal ion, and a tetrahedral (YO₄)ⁿ⁻ anion unit. The transition metal may be one or more of Mn, Fe, Ni, Co, Cr, Cu, Ti, Zn, V, Zr, and Ce; Y may be one or more of P, S, and Si; and n represents a valence state of (YO₄)ⁿ⁻.

The polyanionic compound may alternatively be a compound having a sodium ion, a transition metal ion, a tetrahedral (YO₄)ⁿ⁻ anion unit, and a halogen anion. The transition metal may be one or more of Mn, Fe, Ni, Co, Cr, Cu, Ti, Zn, V, Zr, and Ce; Y may be one or more of P, S, and Si, and n represents a valence value of (YO₄)ⁿ⁻; and the halogen may be one or more of F, Cl, and Br.

The polyanionic compound may alternatively be a compound having a sodium ion, a tetrahedral (YO₄)ⁿ⁻ anion unit, a polyhedral unit (ZO_{y})^{m+}, and an optional halogen anion. Y may be one or more of P, S, and Si, and n represents a valence value of (YO₄)ⁿ⁻; Z represents a transition metal, and may be one or more of Mn, Fe, Ni, Co, Cr, Cu, Ti, Zn, V, Zr, and Ce, and m represents a valence value of (ZO_{y})^{m+}; and the halogen may be one or more of F, Cl, and Br.

The polyanionic compound is, for example, one or more of NaFePO₄, Na₃V₂(PO₄)₃(sodium vanadium phosphate, NVP for short), Na₄Fe₃(PO₄)₂(P₂O₇), NaM'PO₄F (M' is one or more of V, Fe, Mn, and Ni), and Na₃(VO_{y})₂(PO₄)₂F_{3-2y} (0≤y≤1).

The Prussian blue compound may be a compound having a sodium ion, a transition metal ion, and a cyanide ion (CN⁻). The transition metal may be one or more of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently one or more of Ni, Cu, Fe, Mn, Co, and Zn, 0<a≤2, 0<b<1, and 0<c<1.

A weight ratio of the positive electrode active material in the active material layer is 80 wt% to 100 wt% based on the total weight of the active material layer.

In some implementations, the active material layer optionally further includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. A weight ratio of the binder in the active material layer is 0 wt% to 20 wt% based on the total weight of the active material layer.

In some implementations, the active material layer further optionally includes a conductive agent. As a non-limiting example, the conductive agent may include one or more of superconducting carbon, acetylene black, carbon black, ketjen black, carbon dots, carbon nanotubes, graphene, and carbon nanofibers. A weight ratio of the conductive agent in the active material layer is 0 wt% to 20 wt% based on the total weight of the active material layer.

In some implementations, the positive electrode sheet may be prepared in the following manner: dispersing the foregoing components, for example, the positive electrode active material, the conductive agent, the binder, and any other components, used to prepare the positive electrode sheet in a solvent (for example, N-methylpyrrolidone), to form a positive electrode slurry, where a solid content of the positive electrode slurry is 40 wt% to 80 wt%, and a viscosity of the positive electrode slurry at room temperature is adjusted to 5000 mPa.s to 25000 mPa.s; coating the positive electrode slurry on a surface of the positive electrode current collector; and performing cold pressing with a cold rolling mill after drying to form the positive electrode sheet, where a coating unit area density of positive electrode powder is 150 mg/m² to 350 mg/m², and the compacted density of the positive electrode sheet is 3.0 g/cm³ to 3.6 g/cm³, optionally 3.3 g/cm³ to 3.5 g/cm³.

A calculation formula of the compacted density is: compacted density = coating areal density/(thickness of pressed electrode sheet - thickness of current collector).

The mass M of the positive electrode active material per unit area of a positive electrode film sheet can be obtained by weighing with a standard balance.

The thickness T of the positive electrode film sheet may be obtained by measuring with a micrometer, for example, may be obtained by measuring with a micrometer having a model number of Mitutoyo293-100 and precision of 0.1 µm. It should be noted that the thickness of the positive electrode film sheet described in the present application refers to the thickness of the positive electrode film sheet in the positive electrode sheet used for assembling a battery after cold pressing and compaction.

### Negative electrode sheet

The negative electrode sheet is the negative electrode sheet including the lithium metal foil in the present application.

### Electrolyte

The electrolyte functions to conduct ions between the positive electrode sheet and the negative electrode sheet. The type of the electrolyte is not particularly limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, an electrolyte salt of a lithium ion battery may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

In some implementations, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), ethylsulfonylethane (ESE), dimethyl ether (DME), diethyl ether (DEE), propyl ether (DPE), butyl ether (DBE), methyl ethyl ether (MEE), methyl propyl ether (MPE), methyl butyl ether (MBE), ethyl propyl ether (EPE), ethyl butyl ether (EBE), propyl butyl ether (PBE), dimethoxymethane (DMM), diethoxymethane (DEM), dipropoxymethane (DPM), dimethoxyethane (DME), dimethoxypropane (DMP), diethoxyethane (DEE), ethylene glycol methyl ethyl ether (EGEME), diethylene glycol dimethyl ether (DEGDME), triethylene glycol dimethyl ether (TEGDME), tetraethylene glycol dimethyl ether (TEGDME), tetrahydrofuran (THF), 1,3-dioxolane (DOL), tetrahydropyran (THP), 1,3-dioxane (1,3-DX), 1,4-dioxane (1,4-DX), fluorobenzene, p-difluorobenzene, m-difluorobenzene, o-difluorobenzene, benzotrifluoride, trifluoromethoxybenzene, decafluoropentane, 1,1,2,2-tetrafluoroethyl-2,2,3,3-tetrafluoropropyl ether, 1,2-dimethoxy-1,1,2,2-tetrafluoroethane, 1,2-bis(difluoromethoxy)ethane, 1,2-bis(trifluoromethoxy)ethane, 1,2-diethoxy-1,1,2,2-tetrafluoroethane, 1,2-bis(1,1,2,2-tetrafluoroethoxy)ethane, bis(2,2,2-trifluoroethyl)ether, bis(2,2-difluoroethyl)ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, bis(1,1,2,2-tetrafluoroethyl)ether, N,N-dimethylfluorosulfonamide, or N,N-dimethyltrifluoromethanesulfonamide.

In some implementations, the electrolyte solution optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), or the like.

### Separator

In some implementations, the battery further includes a separator. The type of the separator is not particularly limited in the present application, and any well-known porous separator with good chemical stability and mechanical stability may be used.

In some implementations, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 µm to 40 µm, optionally 12 µm to 20 µm.

In some implementations, the positive electrode sheet, the negative electrode sheet, and the separator may be manufactured into an electrode assembly through a winding process or a lamination process.

In some implementations, the battery may include an outer package. The outer package may be used to package the electrode assembly and the electrolyte.

In some implementations, the outer package of the battery may be a hard casing, for example, a hard plastic casing, an aluminum casing, or a steel casing. The outer package of the battery may also be a pouch, such as a bag-type pouch. A material of the pouch may be plastic, and further, non-limiting examples of the plastic may include one or more of polypropylene, polybutylene terephthalate, and polybutylene succinate.

The battery includes at least one battery cell. The battery may include one or a plurality of battery cells.

In the present application, unless otherwise specified, a "battery cell" refers to a basic unit capable of implementing mutual conversion of chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

The shape of the battery cell is not particularly limited in the present application, and may be a cylindrical shape, a square shape, or any other shape. For example, FIG. 14 shows a battery cell 5 with a square structure as an example.

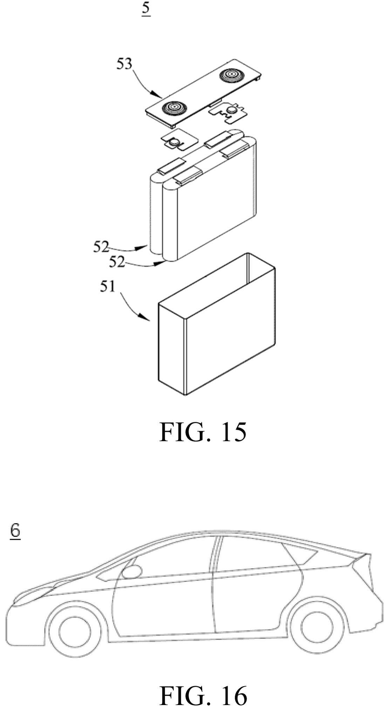

In some implementations, referring to FIG. 15, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the battery cell 5, and those skilled in the art may perform selection according to specific actual requirements.

In some implementations, the battery cell 5 may be assembled into a battery module, there may be one or a plurality of battery cells 5 included in the battery module, and those skilled in the art may select a specific quantity based on the application and capacity of the battery module.

In the battery module, a plurality of battery cells 5 may be arranged sequentially in a length direction of the battery module. Certainly, the secondary batteries may alternatively be arranged in any other manner. Further, the plurality of battery cells 5 may be fastened by using fasteners.

Optionally, the battery module may further include a case having an accommodating space in which the plurality of battery cells 5 are accommodated.

In some implementations, the battery modules may be further assembled into a battery pack, there may be one or a plurality of battery modules included in the battery pack, and those skilled in the art may select a specific quantity based on the application and capacity of the battery pack.

A battery case and a plurality of battery modules disposed in the battery case may be included in the battery pack. The battery case includes an upper case and a lower case, the upper case being capable of covering the lower case and forming a closed space for accommodating the battery modules. The plurality of battery modules may be arranged in the battery case in any manner.

In addition, the present application further provides an electric apparatus. The electric apparatus includes at least one of the battery, the battery module, or the battery pack provided in the present application. The battery, the battery module, or the battery pack may be used as a power supply of the electric apparatus and may also be used as an energy storage unit of the electric apparatus. The electric apparatus may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The battery, the battery module, or the battery pack may be selected according to use requirements of the electric apparatus.

FIG. 16 shows an electric apparatus 6 as an example. The electric apparatus is a pure electric vehicle, a hybrid electric vehicle, a plug-in hybrid electric vehicle, or the like. In order to meet the demand for high power and high energy density of a battery by the electric apparatus, a battery pack or a battery module may be used.

In another example, the apparatus may be a cell phone, a tablet computer, a notebook computer, or the like. This electric apparatus is generally required to be thin and lightweight, and may use a battery as a power supply.

### Some embodiments are described below.

In order to make the technical problems solved by the present application, the technical solutions, and the beneficial effects clearer, the present application will be further described in detail below with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

In the embodiments, specific techniques or conditions are not indicated, and they are performed according to techniques or conditions described in documents in the art or according to the specification of the product. The reagents or instruments used without specifying the manufacturer(s) are conventional products that are commercially available.

### I. Embodiments

### Embodiment 1:

### (1) Preparation of a positive electrode sheet

A positive electrode active material NCM₈₁₁, a conductive agent ketjen black, and a binder polyvinylidene fluoride are stirred to disperse in N-methylpyrrolidone (NMP) according to a mass ratio of 98:1:1 to prepare a positive electrode slurry, the positive electrode slurry is coated on a positive electrode current collector aluminum foil of which the thickness is 7 µm, and an active material layer is formed on a positive electrode current collector after compaction by a cold press machine; and a mixed slurry of polyvinylidene fluoride and aluminum oxide particles is coated on the positive electrode collector, a mass ratio of the polyvinylidene fluoride to the aluminum oxide particles in the mixed slurry is 1:9, the mixed slurry surrounds the active material layer, and an inactive material layer is formed around the active material layer after the mixed slurry is cured, to obtain the positive electrode sheet. The thickness of the inactive material layer is equal to the thickness of the active material layer.

### (2) Preparation of a negative electrode sheet

Two lithium metal foils are stacked, one ends of the two lithium metal foils sandwich a copper foil, one end of the copper foil extends out from the ends of the lithium metal foils to form a blank region; the two lithium metal foils and the copper foil are integrated by rolling under heating, a region that is on the lithium metal foil and that is coated with the copper foil forms a tab lead-out portion, and a region that is not coated with the copper foil forms an electrode sheet portion; and the blank region of the copper foil is cut to form a tab connecting piece, thereby obtaining the negative electrode sheet. The thickness of the integrated lithium metal foil formed after lamination is 30 µm, and the length of the copper foil in the tab lead-out portion is equal to the width of the lithium metal foil.

### (3) Preparation of an electrolyte solution

A lithium salt LiPF₆ is added into a mixed solvent of ethylene carbonate (EC) and ethyl methyl carbonate (EMC) at a mass ratio of 35:65, and the mixture is uniformly mixed to obtain the electrolyte solution. The molar concentration of LiPF₆ in the electrolyte solution is 1 mol/L.

### (4) Separator

A polyethylene porous film of which the thickness is 12 µm is selected as the separator.

### (5) Preparation of a lithium metal battery

The positive electrode sheet, the separator, and the negative electrode sheet that are prepared above are stacked in sequence, the separator is located between the positive electrode sheet and the negative electrode sheet to plays a separation action, and the positive electrode sheet, the separator, and the negative electrode sheet are wound to obtain a bare cell; and a schematic diagram when the positive electrode sheet and the negative electrode sheet are stacked is shown in FIG. 7.

An orthographic projection of the active material layer of the positive electrode sheet on the negative electrode sheet falls within a range of the electrode sheet portion of the negative electrode sheet; an orthographic projection of an edge of the electrode sheet portion of the negative electrode sheet on the positive electrode sheet falls within a range of the inactive material layer; an orthographic projection of an outer edge of the tab lead-out portion on the positive electrode sheet falls within the range of the inactive material layer; a distance a between the orthographic projection of the edge of the electrode sheet portion on the positive electrode sheet and an outer edge of the inactive material layer is 1.5 mm; and a distance b between the orthographic projection of the edge of the electrode sheet portion on the positive electrode sheet and an outer edge of the active material layer is 1.5 mm.

The bare cell is inserted into a battery housing, and the lithium metal battery is obtained through processes such as baking, liquid injection, standing, packaging, chemical formation, and capacity grading. A liquid injection coefficient of the electrolyte solution is 1.5 g/Ah.

### Embodiment 2:

This embodiment is basically the same as Embodiment 1, and a difference lies only in that: The positive electrode current collector is a composite current collector; the positive electrode current collector includes a polyimide polymer support layer, an aluminum metal is evaporated as a conductive layer on both upper and lower surfaces of the polymer support layer, and the active material layer and the inactive material layer are both disposed on the conductive layer; and the thickness of the polymer support layer is 3 µm, and the thickness of the conductive layer is 2 µm. A schematic diagram of a structure of the positive electrode sheet in this embodiment is shown in FIG. 2, and a schematic diagram of a structure of the positive electrode current collector is shown in FIG. 5.

### Embodiment 3:

This embodiment is basically the same as Embodiment 2, and a difference lies only in that: The thickness of the inactive material layer has a gradient design; and the thickness of the inactive material layer gradually decreases from being equal to the thickness of the active material layer to zero in a direction extending outward from a side that is of the inactive material layer and that is close to the active material layer. A schematic diagram of a structure of the positive electrode sheet in this embodiment is shown in FIG. 3.

### Embodiment 4:

This embodiment is basically the same as Embodiment 2, and a difference lies only in that: The thickness of the inactive material layer has a region-wise design; the inactive material layer includes a first region and a second region, the first region being close to the active material layer, the second region being located on a side that is of the first region and that faces away from the active material layer, and the thickness of the inactive material layer in the first region being equal to the thickness of the active material layer; the width of the first region is equal to the distance b between the orthographic projection of the edge of the electrode sheet portion on the positive electrode sheet and the outer edge of the active material layer, that is, 1.5 mm; and the thickness of the inactive material layer in the second region gradually decreases from being equal to the thickness of the active material layer to zero in a direction extending outward from a side close to the first region. A schematic diagram of a structure of the positive electrode sheet in this embodiment is shown in FIG. 4.

### Embodiment 5:

This embodiment is basically the same as Embodiment 2, and a difference lies only in that: In the bare cell, the distance a between the orthographic projection of the edge of the electrode sheet portion on the positive electrode sheet and the outer edge of the inactive material layer is 1 mm; and the distance b between the orthographic projection of the edge of the electrode sheet portion on the positive electrode sheet and the outer edge of the active material layer is 1 mm.

### Embodiment 6:

This embodiment is basically the same as Embodiment 2, and a difference lies only in that: In the bare cell, the distance a between the orthographic projection of the edge of the electrode sheet portion on the positive electrode sheet and the outer edge of the inactive material layer is 3 mm; and the distance b between the orthographic projection of the edge of the electrode sheet portion on the positive electrode sheet and the outer edge of the active material layer is 3 mm.

### Embodiment 7:

This embodiment is basically the same as Embodiment 2, and a difference lies only in that: In the bare cell, the distance a between the orthographic projection of the edge of the electrode sheet portion on the positive electrode sheet and the outer edge of the inactive material layer is 5 mm; and the distance b between the orthographic projection of the edge of the electrode sheet portion on the positive electrode sheet and the outer edge of the active material layer is 5 mm.

### Embodiment 8:

This embodiment is basically the same as Embodiment 7, and a difference lies only in that: The orthographic projection of the outer edge of the tab lead-out portion on the positive electrode sheet falls beyond the range of the inactive material layer, that is, the inactive material layer cannot cover the outer edge of the tab lead-out portion. A schematic diagram when the positive electrode sheet and the negative electrode sheet in the battery of this embodiment are stacked is shown in FIG. 6.

### Embodiment 9:

This embodiment is basically the same as Embodiment 2, and a difference lies only in that: The material of the inactive material layer in the positive electrode sheet is different; and in this embodiment, the inactive material layer uses a mixture of polyvinylidene fluoride-hexafluoropropylene copolymer and titanium oxide particles.

### Embodiment 10:

This embodiment is basically the same as Embodiment 2, and a difference lies only in that: The thickness of a negative electrode lithium metal foil is 10 µm.

### Embodiment 11:

This embodiment is basically the same as Embodiment 2, and a difference lies only in that: The thickness of the negative electrode lithium metal foil is 50 µm.

### Embodiment 12:

This embodiment is basically the same as Embodiment 2, and a difference lies only in that: The negative electrode uses a copper foil of which the thickness is 10 µm as a negative electrode current collector, and a lithium metal layer of which the thickness is 15 µm is formed on each of two surfaces of the copper foil.

### II. Comparative Examples

### Comparative example 1:

This comparative example is basically the same as Embodiment 2, and a difference lies only in that: The active material layer is disposed on the entire conductive layer of the positive electrode sheet, and the inactive material layer is not disposed around the active material layer; the orthographic projection of the active material layer of the positive electrode sheet on the negative electrode sheet falls within the range of the electrode sheet portion of the negative electrode sheet; and the edge of the electrode sheet portion of the negative electrode sheet exceeds the range of the active material layer of the positive electrode sheet, that is, the electrode sheet portion exceeds the active material layer of the positive electrode sheet in both a length direction and a width direction of an electrode sheet, thereby forming an overhang region.

### Comparative example 2:

This comparative example is basically the same as Embodiment 10, and a difference lies only in that: The active material layer is disposed on the entire conductive layer of the positive electrode sheet, and the inactive material layer is not disposed around the active material layer; the orthographic projection of the active material layer of the positive electrode sheet on the negative electrode sheet falls within the range of the electrode sheet portion of the negative electrode sheet; and the edge of the electrode sheet portion of the negative electrode sheet exceeds the range of the active material layer of the positive electrode sheet, that is, the electrode sheet portion exceeds the active material layer of the positive electrode sheet in both a length direction and a width direction of an electrode sheet, thereby forming an overhang region.

### III. Performance Tests

### (1) Calculation of the energy density of a battery

The mass of the lithium metal cell prepared above is weighed and denoted as m. Then, an ambient temperature is set to 25°C, and then a charge and discharge test is performed, where a constant current-constant voltage charging flow is adopted in a charging process, constant current charging is performed at a rate of 0.1 C, and when the battery is charged to a voltage of 4.3 V, the battery enters a constant voltage charging mode, and a cut-off current is set to 0.05 C. After the battery is fully charged, the cell is allowed to stand for 10 min, and then a constant current discharge test is performed at a rate of 0.1 C, with a lower cut-off voltage set to 2.8 V. The total discharge energy after the discharge is terminated is denoted as E₀. Then, the energy density e of the cell may be calculated by using the following formula: e=E₀/m.

### (2) Test of the cycle life of the battery

The cell after the energy density is determined is taken, the ambient temperature is set to 25°C, and a charge and discharge cycle is performed at rates of 0.2 C for charge and 1 C for discharge. Cut-off voltages for charge and discharge are set to 4.3 V and 2.8 V, respectively, and the charging process uses a constant current-constant voltage charging method. Specifically, after constant current charging at 0.2 C reaches the cut-off voltage of 4.3 V, constant voltage charging of 4.3 V is continued until the current is attenuated to 0.05 C. When a discharge capacity is attenuated to 80% of a first cycle discharge capacity, the battery life is considered to be terminated. In this case, a quantity of cycles is the cycle life of the cell.

Parameters and performance test results of the lithium metal battery in the foregoing embodiments and comparative examples are shown in Table 1.

**Table 1**

| Item | Material of the inactive material layer | Thickness of the inactive material layer | Whether the inactive material layer covers the tab lead-out portion | Positive electrode current collector | a (mm) | b (mm) | Thickness of the negative electrode (µm) | Energy density (Wh/kg) | Cycle life (cycle) |
|---|---|---|---|---|---|---|---|---|---|
| Embodiment 1 | PVDF+aluminum oxide | Equal to the thickness of the active material layer | Yes | Aluminum foil | 1.5 | 1.5 | 30 | 521 | 317 |
| Embodiment 2 | PVDF+aluminum oxide | Equal to the thickness of the active material layer | Yes | Composite current collector | 1.5 | 1.5 | 30 | 556 | 317 |
| Embodiment 3 | PVDF+aluminum oxide | Thickness gradient design | Yes | Composite current collector | 1.5 | 1.5 | 30 | 558 | 308 |
| Embodiment 4 | PVDF+aluminum oxide | Thickness region-wise design | Yes | Composite current collector | 1.5 | 1.5 | 30 | 558 | 317 |
| Embodiment 5 | PVDF+aluminum oxide | Equal to the thickness of the active material layer | Yes | Composite current collector | 1 | 1 | 30 | 561 | 313 |
| Embodiment 6 | PVDF+aluminum oxide | Equal to the thickness of the active material layer | Yes | Composite current collector | 3 | 3 | 30 | 550 | 317 |
| Embodiment 7 | PVDF+aluminum oxide | Equal to the thickness of the active material layer | Yes | Composite current collector | 5 | 5 | 30 | 535 | 317 |
| Embodiment 8 | PVDF+aluminum oxide | Equal to the thickness of the active material layer | No | Composite current collector | 5 | 5 | 30 | 537 | 306 |
| Embodiment 9 | PVDF-HFP+titanium oxide | Equal to the thickness of the active material layer | Yes | Composite current collector | 1.5 | 1.5 | 30 | 557 | 317 |
| Embodiment 10 | PVDF+aluminum oxide | Equal to the thickness of the active material layer | Yes | Composite current collector | 1.5 | 1.5 | 10 | 560 | 157 |
| Embodiment 11 | PVDF+aluminum oxide | Equal to the thickness of the active material layer | Yes | Composite current collector | 1.5 | 1.5 | 50 | 552 | 479 |
| Embodiment 12 | PVDF+aluminum oxide | Equal to the thickness of the active material layer | Yes | Composite current collector | 1.5 | 1.5 | 10 µm copper foil with both surfaces each coated with a 15 µm lithium metal layer | 503 | 317 |
| Comparative example 1 | / | / | No | Composite current collector | / | 1.5 | 30 | 563 | 102 |
| Comparative example 2 | / | / | No | Composite current collector | / | 1.5 | 10 | 566 | 28 |

It can be learned from Table 1 that:
The lithium metal battery in each embodiment of the present application has a high energy density and a long cycle life.

It can be learned, by comparing Embodiment 1 and Embodiment 2, that the use of the composite current collector in the positive electrode can significantly improve the energy density of the battery while maintaining the cycle life.

It can be learned, by comparing Embodiment 2 and Embodiment 3, that in Embodiment 3, the inactive material layer of the positive electrode sheet has a thickness gradient design (that is, the thickness of the inactive material layer gradually decreases from being equal to the thickness of the active material layer to zero in the direction extending outward from the side that is of the inactive material layer and that is close to the active material layer), which can further improve the energy density of the battery.

It can be learned, by comparing Embodiments 2 to 4, that in Embodiment 4, the inactive material layer of the positive electrode sheet has a thickness region-wise design, which can ensure that the lithium in the overhang region of the negative electrode is in a pressurized state in a cycle process, and can implement the maximum weight reduction while reducing growth of lithium dendrites in this region. The lithium metal battery of Embodiment 4 has a high energy density and long cycle performance.

It can be learned, by comparing Embodiment 2 and Embodiments 5 to 7, that the battery may have both a high energy density and a long cycle life by controlling the widths of a and b to be within the range of 1 mm to 5 mm; and further, the energy density and the cycle life of the battery may be better considered by controlling the widths of a and b to be within the range of 1.5 mm to 3 mm.

It can be learned, by comparing Embodiment 7 and Embodiment 8, that the inactive material layer in Embodiment 7 covers the tab lead-out portion, which is conductive to ensuring that all regions of the negative electrode lithium metal foil are in a pressurized state, and is more conductive to prolonging the cycle life of the battery.

It can be learned, by comparing Embodiment 2 and Embodiments 10 to 11, that the battery may have a high energy density and a long cycle life by controlling the thickness of the negative electrode lithium metal foil to be within the range of 10 µm to 50 µm; and further, the energy density and the cycle life of the battery may be better considered by controlling the thickness of the negative electrode lithium metal foil to be within the range of 30 µm to 50 µm, thereby obtaining a battery having a high energy density and a long cycle life.

In Embodiment 12, the negative electrode of the battery adopts a 10 µm copper foil with both surface each coated with a 15 µm lithium metal layer. Although the cycle life of the battery is better, the energy density of the battery is reduced compared with Embodiment 2.

It can be learned, by comparing Embodiment 2 and Comparative examples 1 to 2, that when the positive electrode sheet of the lithium metal battery does not use the positive electrode sheet of the present application, the cycle life of the battery is significantly reduced. The batteries of Comparative examples 1 and 2 cannot achieve both high energy density and long cycle life.

The above descriptions of the various embodiments tend to emphasize differences between the various embodiments. For same or similar parts thereof, refer to these embodiments. For brevity, details are not described herein again.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. A positive electrode sheet, comprising a positive electrode current collector, and an active material layer and an inactive material layer that are disposed on at least one surface of the positive electrode current collector, the inactive material layer being disposed around a periphery of the active material layer, the active material layer comprising a positive electrode active material, and the active material layer and the inactive material layer being disposed in a same layer.

2. The positive electrode sheet according to claim 1, wherein a material of the inactive material layer comprises an insulating material, the insulating material comprising one or more of an organic insulating material and an inorganic insulating material.

3. The positive electrode sheet according to claim 2, wherein the organic insulating material comprises an organic polymer, the organic polymer comprising one or more of polymethyl methacrylate, polyimide, polyethylene, polypropylene, polytetrafluoroethylene, polyvinylidene fluoride, and polyvinylidene fluoride-hexafluoropropylene copolymer.

4. The positive electrode sheet according to claim 2 or 3, wherein the inorganic insulating material comprises oxide particles, the oxide particles comprising one or more of aluminum oxide particles and titanium oxide particles.

5. The positive electrode sheet according to any one of claims 1 to 4, wherein the thickness of the inactive material layer is equal to the thickness of the active material layer.

6. The positive electrode sheet according to any one of claims 1 to 5, wherein the thickness of a side that is of the inactive material layer and that is close to the active material layer is greater than the thickness of a side that is of the inactive material layer and that is away from the active material layer.

7. The positive electrode sheet according to any one of claims 1 to 6, wherein the thickness of the inactive material layer gradually decreases in a direction extending outward from the side that is of the inactive material layer and that is close to the active material layer.

8. The positive electrode sheet according to any one of claims 1 to 7, wherein the inactive material layer comprises a first region and a second region, the first region being close to the active material layer, the second region being located on a side that is of the first region and that faces away from the active material layer, the thickness of the inactive material layer in the first region being equal to the thickness of the active material layer, and the thickness of the inactive material layer in the second region gradually decreasing in a direction extending outward from a side close to the first region.

9. The positive electrode sheet according to any one of claims 1 to 8, wherein the positive electrode current collector comprises a polymer support layer and a conductive layer disposed on at least one surface of the polymer support layer, and the active material layer and the inactive material layer are disposed on a surface that is of the conductive layer and that faces away from the polymer support layer.

10. A battery, comprising a positive electrode sheet and a negative electrode sheet that are stacked, wherein the positive electrode sheet comprises the positive electrode sheet according to any one of claims 1 to 9, the negative electrode sheet comprises a lithium metal foil, the lithium metal foil comprises an electrode sheet portion and a tab lead-out portion connected to the electrode sheet portion, and an orthographic projection of an edge of the electrode sheet portion on the positive electrode sheet falls within a range of the inactive material layer.

11. The battery according to claim 10, wherein a distance between the orthographic projection of the edge of the electrode sheet portion on the positive electrode sheet and an outer edge of the inactive material layer is a, and a is 1 mm to 5 mm.

12. The battery according to claim 11, wherein a is 1.5 mm to 3 mm.

13. The battery according to any one of claims 10 to 12, wherein an orthographic projection of the active material layer on the negative electrode sheet falls within a range of the electrode sheet portion.

14. The battery according to claim 13, wherein a distance between the orthographic projection of the edge of the electrode sheet portion on the positive electrode sheet and an outer edge of the active material layer is b, and b is 1 mm to 5 mm.

15. The battery according to claim 14, wherein b is 1.5 mm to 3 mm.

16. The battery according to claim 14 or 15, wherein the inactive material layer comprises a first region and a second region, the first region being close to the active material layer, the second region being located on a side that is of the first region and that faces away from the active material layer, the thickness of the inactive material layer in the second region gradually decreasing in a direction extending outward from a side close to the first region, and the thickness of the inactive material layer in the first region being equal to the thickness of the active material layer.

17. The battery according to any one of claims 10 to 16, wherein an orthographic projection of an outer edge of the tab lead-out portion on the positive electrode sheet falls within the range of the inactive material layer.

18. The battery according to any one of claims 10 to 17, wherein the tab lead-out portion is provided with a tab lead-out foil composited with the lithium metal foil, and a tab connecting piece is connected to the tab lead-out foil.

19. The battery according to claim 18, wherein the width of the tab connecting piece is c, the length of the tab lead-out foil is d, the width of an end that is of the lithium metal foil and that is close to the tab connecting piece is e, and c≤d≤e.

20. The battery according to any one of claims 10 to 19, wherein the thickness of the lithium metal foil is 10 µm to 50 µm.

21. The battery according to any one of claims 10 to 20, wherein the thickness of the lithium metal foil is 30 µm to 50 µm.

22. An electric apparatus, comprising the battery according to any one of claims 10 to 21.
